# FASCICULE DE BREVET EUROPEEN

(11) **EP 2 084 569 B1**
(45) Date de publication et mention de la délivrance du brevet: **28.12.2011**
(21) Numéro de dépôt: 07858700.3
(22) Date de dépôt: 15.11.2007
(51) Int. Cl.: G02C 7/10, G02C 5/00

(54) **LENTILLES OPHTALMIQUES COLOREES MULTI-TEINTES**
MEHRFARBIGE BRILLENGLÄSER
MULTI-TINT COLOURED OPHTHALMIC LENSES

(30) Priorité: 17.11.2006 FR 0610095
(43) Date de publication de la demande: 05.08.2009
(73) Titulaire: Essilor International (Compagnie Générale D'Optique), 94220 Charenton le Pont (FR)
(72) Inventeur: GIRAUDET, Guillaume, 94220 Charenton-le-Pont (FR)
(74) Mandataire: Cabinet Plasseraud
(86) Numéro de dépôt international: PCT/FR2007/052344
(87) Numéro de publication internationale: WO 2008/059175

(56) Documents cités:
- FR-A2- 2 418 478
- US-A- 3 628 854
- US-A- 5 408 278
- US-A1- 2006 092 374
- US-B1- 6 811 258
- WOLFFSOHN: "contrast is enhanced by yellow lenses becasue of selective reduction of short-wavelength light", OPTOMETRY AND VISION SCIENCE, vol. 77, no. 2, 1 February 2000 (2000-02-01), pages 73-81,
- WOLFFSOHN: "contrast is enhanced by yellow lenses becasue of selective reduction of short-wavelength light", OPTOMETRY AND VISION SCIENCE, vol. 77, no. 2, 1 February 2000 (2000-02-01), pages 73-81,

## Description

La présente invention se rapporte au domaine de la coloration de lentilles ophtalmiques. Plus particulièrement, l'invention concerne un nouveau design de coloration multi-teinte de lentilles ophtalmiques.

Au sens de l'invention, on entend par lentilles ophtalmiques des lentilles correctrices et non correctrices mais également des masques et autres dispositifs de vision destinés à être portés devant les yeux.

Avec l'âge, les différentes structures impliquées dans la fonction visuelle subissent des modifications. Le cristallin, lentille biconvexe située derrière l'iris, participe au processus de mise au point des images sur la rétine lorsque l'objet regardé change de distance. Ce processus, appelé accommodation, s'altère avec l'âge : le cristallin perd sa capacité à se bomber lorsque un objet est approché de l'oeil, par exemple lors de la lecture, diminuant ainsi la capacité de l'oeil à voir des objets proches ; c'est la presbytie. Outre cette altération de la capacité d'accommodation, le cristallin subit également des modifications histologiques qui engendrent notamment une augmentation de l'absorption et de la dispersion de la lumière visible dans le domaine des courtes longueurs d'ondes, c'est-à-dire de la lumière bleue, à l'origine de troubles fonctionnels de sensibilité au contraste et de sensibilité à l'éblouissement qui apparaissent et/ou s'accentuent avec l'âge. Pour lutter contre les effets délétères de la moindre qualité de transmission de la lumière bleue dans le cristallin âgé, des filtres jaunes sont préconisés. Ces filtres, en coupant spécifiquement les courtes longueurs d'ondes, réduisent ainsi les gênes liées à l'éblouissement de voile et améliorent la perception des contrastes.

De tels filtres sont notamment décrits dans Wolffsohn et al., Optometry and Vision Science, volume 77(2), pages 73-81, (2000). Les travaux de Wolffsohn montrent que la coupure des courtes longueurs d'ondes par des filtres jaunes augmente la perception du contraste, notamment lorsque l'on regarde des objets lumineux sur un fond globalement bleu, comme le ciel.

Il existe d'assez nombreux documents proposant des lunettes pour améliorer la perception de contrastes de personnes âgées.

Ainsi, le brevet US 5 408 278 divulgue des dispositifs de vision binoculaire comportant deux verres de couleurs différentes, l'un de ces verres bloquant en priorité les courtes longueurs d'onde et l'autre bloquant en priorité la lumière à grande longueur d'onde, la transmission combinée de ces deux verres étant au moins égale à 50 % à n'importe quelle longueur d'onde particulière. Ce document envisage également certains designs multi-couleur, mais les couleurs bloquant les courtes longueurs d'onde ne sont jamais associées, dans une même lentille, aux couleurs bloquant les grandes longueurs d'ondes.
De façon similaire, le brevet US 6 811 258 divulgue des lunettes avec des verres de couleurs différentes, l'un étant jaune et l'autre de couleur verte. Ce document ne mentionne à aucun moment le problème d'une possible perturbation du rythme veille-sommeil de patients portant sur une longue durée des lunettes filtrant la lumière de courte longueur d'onde. Il ne décrit pas non plus de verres de lunettes bicolores où une zone centrale de vision maculaire a une couleur différente de celle d'une zone périphérique.

Le brevet US 3 628 854 divulgue des membranes en matière plastiques colorées destinées à être collées temporairement sur des verres de lunettes. Ce document divulgue notamment une membrane avec une zone centrale de couleur jaune et une zone périphérique de couleur bleue, destinées en combinaison l'une avec l'autre d'augmenter la perception maculaire.

US 2006/0092374 décrit des lentilles optiques associées à des filtres de type « Rugate », bloquant sélectivement la lumière bleue. Ces lentilles offrent une qualité de transmission de la lumière et une clarté de vision améliorées. US 2006/0092374 décrit également l'utilisation de telles lentilles pour traiter notamment la dégénérescence maculaire et la cataracte.

Les travaux récents de Herljevic et al., Exp Gerontol., volume 40(3), pages 237-42 (2005), montrent toutefois que l'appauvrissement de l'environnement lumineux en courtes longueurs d'ondes serait un facteur de dérèglement de l'horloge circadienne, largement constaté chez les personnes âgées dont le cristallin jauni ne laissait plus passer que peu de lumière bleue.

Porter de façon régulière et prolongée des filtres jaunes pourrait donc s'avérer néfaste pour la régulation des cycles veille-sommeil, comme l'attestent de récentes études de neurophysiologie de la vision montrant que les mécanismes de régulation de l'horloge circadienne sont liés à l'illumination de l'oeil par les courtes longueurs d'ondes de la lumière visible.

Tandis que les besoins exprimés en terme d'acuité visuelle ou de sensibilité au contraste sont déjà satisfaits par des filtres jaunes-oranges, les besoins visuels concernant la régulation du rythme circadien ne semblent en revanche pas encore avoir fait l'objet de produits ophtalmiques spécifiques. La demande internationale WO94/0985 décrit, certes, un système de régulation du rythme circadien mais il ne s'agit pas d'un produit ophtalmique et ce système ne distingue pas l'intervention de la lumière sur le rythme circadien en termes de longueurs d'ondes spécifiques.

Le brevet US5408278 divulgue des membranes plastiques pour la modification non permanente des propriétés optiques de lentilles ophtalmiques. La figure 5 divulgue une telle membrane plastique avec une zone centrale de couleur jaune et une zone périphérique de couleur bleue.

Le problème technique que se propose de résoudre la présente invention est d'améliorer la sensibilité au contraste et de réduire la susceptibilité à l'éblouissement de personnes souffrant d'une altération de la transparence du cristallin telle que décrite en introduction, tout en réduisant ou évitant une éventuelle perturbation de leur rythme circadien due à l'absence de lumière bleue.

Ce problème a été résolu selon la présente invention grâce à des verres comportant à la fois une zone centrale apte à absorber les courtes longueurs d'ondes, correspondant essentiellement à la zone du verre explorée par le regard de l'utilisateur, et une zone périphérique apte à transmettre principalement les courtes longueurs d'ondes et donc absorber les grandes longueurs d'ondes. Cette dernière zone entoure la zone centrale, et n'est généralement pas parcourue par le regard de l'utilisateur. Tandis que la zone centrale absorbant les courtes longueurs d'ondes (inférieures à 480 nm) dans la zone de regard joue le rôle bien connu d'amélioration de la sensibilité au contraste, la zone périphérique, en dehors de la zone de regard, augmente la composante de courte longueur d'onde (bleue) de la lumière pénétrant dans l'oeil, et compense ainsi l'absorption de celle-ci par la zone centrale.

La présente invention a par conséquent pour objet une lentille ophtalmique,

L'adjectif « centrale » utilisé pour décrire la zone de filtre absorbant les courtes longueurs d'ondes, ne signifie pas que cette zone occupe une position correspondant au centre géométrique de la lentille ophtalmique selon l'invention. I1 exprime simplement le fait que cette zone de la lentille n'est pas en contact avec la périphérie de la lentille ophtalmique mais est cirsconscrite par la zone de filtre périphérique absorbant les grandes longueurs d'ondes. Lorsque la lentille ophtalmique comporte un ou plusieurs centres optiques, la zone centrale est généralement centrée autour de ce centre optique ou de chacun de ces centres optiques.

La zone centrale absorbant les courtes longueurs d'ondes présente une transmission inférieure ou égale à 30% pour les courtes longueurs d'ondes comprises entre 400 et 480 nm et une transmission supérieure à 50% dans le domaine des grandes longueurs d'ondes comprises entre 480nm et 700nm. De manière encore plus avantageuse, la zone centrale absorbant les courtes longueurs d'ondes présente une transmission inférieure ou égale à 20% pour les courtes longueurs d'ondes comprises entre 400 et 480 nm.

Selon un mode de réalisation préféré de l'invention, la zone centrale est de couleur jaune.

La zone périphérique absorbant les grandes longueurs d'ondes présentent une transmission supérieure ou égale à 60% dans le domaine des courtes longueurs d'ondes comprises entre 400nm et 500 nm, et une transmission inférieure à 50% dans le domaine des grandes longueurs d'ondes comprises entre 500nm et 700nm. Plus préférentiellement, la zone périphérique absorbant les grandes longueurs d'ondes présentent une transmission supérieure ou égale à 70% dans le domaine des courtes longueurs d'ondes comprises entre 400nm et 500 nm.

Selon un mode de réalisation préférentielle de l'invention, la zone périphérique est de couleur bleue.

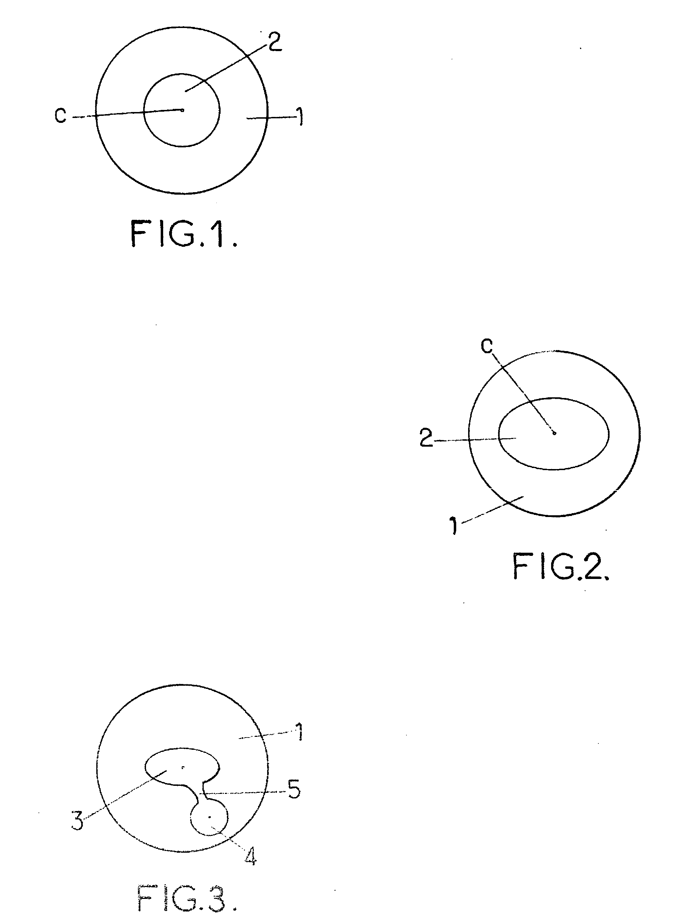

Les figures 1 et 2 représentent des lentilles monofocales comportant une zone de filtre périphérique absorbant les grandes longueurs d'ondes **(1)** entourant une zone centrale **(2)** absorbant les courtes longueurs d'ondes de forme circulaire ou ovale, centrée autour du centre optique **C** de la lentille.

Avantageusement, le diamètre de la zone circulaire centrale, ou la dimension la plus importante de la zone ovale centrale, est compris(e) entre 5 et 35 mm, de préférence entre 10 et 25 mm, et est en particulier proche de 20 mm.

La présente invention s'appliquer à des lentilles progressives. Ce type de lentille est remarquable en ce qu'elle possède deux zones optiques repérables et contrôlables, c'est-à-dire une zone de vision de loin et une zone de vision de près, reliés par un couloir de progression qui permet à l'oeil de passer d'une vision de loin à une vision de près en douceur, procurant ainsi un véritable confort visuel au porteur. A chacune de ces deux zones optiques peut être associée un centre, appelés centre optique de vision de loin et centre optique de vision de près.

L'invention a donc pour objet une lentille ophtalmique correctrice progressive avec un centre optique de vision de loin et un centre optique de vision de près. Dans le cas d'une telle lentille représentée à la figure 3, la zone centrale, absorbant les courtes longueurs d'ondes, comporte une première zone **(3)**, de préférence de forme circulaire ou ovale, recouvrant essentiellement la zone autour du centre optique de vision de loin, et une deuxième zone **(4)**, de préférence de forme circulaire ou ovale, recouvrant la zone autour du centre optique de vision de près, ainsi qu'une bande **(5)** reliant ces deux zones et correspondant au chemin suivi par l'oeil lorsqu'il passe de l'un à l'autre. Cette bande correspond, en d'autres termes, au « couloir de progression» précité. Le reste de la surface de la lentille est couverte par la zone périphérique absorbant les grandes longueurs d'ondes **(1).**

Dans le cas d'une lentille ophtalmique correctrice progressive, le diamètre ou la dimension la plus importante de la zone centrale (3) recouvrant le centre optique de vision de loin est compris(e) entre 5 et 35 mm, en particulier entre 10 et 25 mm, et est de manière encore plus préférentielle proche de 20 mm.

La zone centrale (4) recouvrant le centre optique de vision de près est généralement plus petite que celle correspondant au centre optique de vision de loin. Le diamètre ou la dimension la plus importante de la zone centrale (4) recouvrant le centre optique de vision de près est compris (e) entre 5 et 15 mm, de préférence entre 7 et 13 mm, et est en particulier proche de 10 mm. La largeur de la bande reliant ces deux zones est comprise entre 3 et 7 mm, de préférence entre 4 et 6 mm, et est en particulier proche de 5 mm. Dans un mode de réalisation particulier de l'invention, cette bande (5) reliant les deux zones centrales (3) et (4) peut optionnellement présenter une zone de filtre des grandes longueurs d'ondes, c'est-à-dire une zone de filtre présentant les mêmes caractéristiques que la zone périphérique (1).

Les dimensions de la zone centrale, absorbant les courtes longueurs d'ondes, indiquées ci-dessus correspondent aux fourchettes appropriées pour la plupart des porteurs de lunettes, mais ne tiennent pas compte des différences individuelles. Or, on comprendra aisément qu'il est avantageux de limiter le plus possible la dimension de la zone centrale à celle de la zone réellement explorée par l'oeil humain afin de maximiser l'étendue de la zone périphérique absorbant les grandes longueurs d'ondes, essentielle pour la régulation du rythme circadien. Une telle optimisation des dimensions relatives des zones d'absorption des courtes longueurs d'ondes et d'absorption des grandes longueurs d'ondes peut être effectuée par exemple grâce à la technologie *Vision Print System* (VPS) développée par la Demanderesse dans le contexte d'autres recherches concernant le comportement visuel. Il s'agit d'un appareil permettant de décrire les différences interindividuelles de stratégie de coordination des yeux et de la tête dans l'exploration visuelle de l'environnement, appelé aussi « comportement oeil-tête ». Ainsi peuvent être définis, d'un côté, des individus plutôt « bougeurs de tête » (en anglais *head mover*) ayant tendance à suivre visuellement un objet par un mouvement de la tête plutôt que par un mouvement de l'oeil, et, de l'autre côté, des individus plutôt «bougeurs d'oeil» (en anglais *eye mover*) ayant tendance a suivre visuellement un objet avec les yeux plutôt qu'avec la tête.

La détermination du comportement oeil-tête d'un porteur de lunettes, permet ainsi d'optimiser la taille de la zone centrale. Si le porteur à tendance à tourner sa tête plutôt que ses yeux pour suivre du regard un objet, une zone centrale de 5 à 20 mm, est généralement suffisant pour couvrir toute la zone de vision du verre. Inversement, si le porteur à tendance à bouger ses yeux plutôt que sa tête pour suivre du regard un objet, alors une zone centrale couvrant une zone relativement large de la lentille est nécessaire, par exemple une zone ayant un diamètre compris entre 20 à 35 mm.

La zone périphérique n'est pas forcément adjacente à la zone centrale et peut en principe être séparée de celle-ci par une bande incolore. Toutefois, dans le but d'accroître le plus possible la fraction de lumière émise dans les courtes longueurs d'ondes pénétrant dans la pupille, la zone périphérique absorbant les grandes longueurs d'ondes de la lentille ophtalmique de l'invention couvre de préférence toute la surface non recouverte par la zone centrale.

La teinte de la zone centrale qui est préférentiellement de couleur jaune ou de la zone périphérique qui est préférentiellement de couleur bleue peut avoir une intensité très faible, et être associée à des verres blancs (c'est-à-dire non teintés ou encore appelés de teinte "cristal") pour une utilisation en intérieur ou sous faibles niveaux lumineux. La teinte de ces zones peut également avoir une intensité forte et être associée à des verres solaires pour une utilisation en extérieur ou sous forts niveaux lumineux.

L'application des filtres teintés correspondant préférentiellemnt à des colorations jaune et bleue sur des supports appropriés en verre minéral ou organiques en vue de la fabrication d'une lentille ophtalmique selon l'invention peut se faire par exemple par sublimation et/ou par impression par jet d'encre. Ces techniques sont décrites par exemple dans les demandes de brevet WO 2006/079564 et FR 2 881 230 au nom de la Demanderesse. On peut également envisager l'application sur un substrat d'un film pixellisé combinée à une technologie d'impression jet d'encre tel que décrit dans la demande de brevet WO 2006/013250.

La présente invention sera mieux comprise à la lecture des exemples suivants qui illustrent de façon non limitative l'objet de l'invention.

### Exemple 1 Coloration de lentilles ophtalmiques selon l'invention par impression par jet d'encre

On mélange sous agitation magnétique 40 % en poids de polyuréthanne anionique (W234 commercialisé par la société Baxenden) avec 60 % en poids de silice colloïdale (Ludox TM40 commercialisé par la société Aldrich). Après une heure d'agitation, on dépose le mélange obtenu par centrifugation (*spin coating*) sur un substrat biplan Orma™ (500 tours/20 secondes). Le dépôt est séché pendant 1h à 100°C à l'étuve. L'épaisseur du primaire ainsi obtenu est de 3.6 µm. Après séchage, la lentille optique comprenant le primaire et le substrat peut être imprimée avec une imprimante Canon i865. Les zones jaune et bleue sont dessinées à l'aide du logiciel Powerpoint™. La lentille ophtalmique est introduite dans le module de chargement de l'imprimante, celle-ci étant reliée à l'ordinateur comprenant le fichier "filtre jaune - filtre bleu" sous Powerpoint™. L'impression est réalisée. Lorsque la lentille sort de l'imprimante, elle est immédiatement séchée 1h à 100°C. On obtient une lentille ophtalmique avec un filtre jaune et un filtre bleu.

## Revendications

1. Lentille ophtalmique, comprenant , à sa surface,
• une première zone, centrale, présentant une transmission inférieure à 30% dans le domaine des courtes longueurs d'ondes comprises entre 400 nm et 480 nm, et une transmission supérieure à 50% dans le domaine des grandes longueurs d'ondes comprises entre 480 nm et 700 nm, et
• une deuxième zone, périphérique, présentant une transmission supérieure à 60% dans le domaine des courtes longueurs d'ondes comprises entre 400 nm et 500 nm, et une transmission inférieure à 50% dans le domaine des grandes longueurs d'ondes comprises entre 500 nm et 700 nm,
la lentille ophtalmique étant une lentille ophtalmique correctrice progressive avec un centre optique de vision de loin et un centre optique de vision de près, la zone centrale recouvrant essentiellement la zone autour du centre optique de vision de loin et la zone autour du centre optique de vision de près, ainsi qu'une bande reliant ces deux zones et correspondant au chemin suivi par l'oeil lorsqu'il passe de l'une à l'autre, le diamètre ou la dimension la plus importante de la zone (3) recouvrant le centre optique de vision de loin étant compris entre 5 et 35 mm, le diamètre ou la dimension la plus importante de la zone (4) recouvrant le centre optique de vision de près étant compris entre 5 et 15 mm, et la largeur de la bande (5) reliant ces deux zones étant comprise entre 3 et 7 mm.

2. Lentille ophtalmique selon la revendication 1, **caractérisée en ce que** ladite zone centrale présente une transmission inférieure ou égale à 20% pour les courtes longueurs d'ondes comprises entre 400nm et 480 nm et une transmission supérieure à 50% dans le domaine des grandes longueurs d'ondes comprises entre 480nm et 700nm.

3. Lentille ophtalmique selon la revendication 1 ou 2, **caractérisée en ce que** la zone centrale est de couleur jaune.

4. Lentille ophtalmique selon selon l'une quelconque des revendications précédentes, **caractérisée en ce que** ladite zone périphérique présente une transmission supérieure ou égale à 70% dans le domaine des courtes longueurs d'ondes comprises entre 400nm et 500 nm, et une transmission inférieure à 50% dans le domaine des grandes longueurs d'ondes comprises entre 500nm et 700nm.

5. Lentille ophtalmique selon l'une quelconque des revendications précédentes, **caractérisée en ce que** la zone périphérique est de couleur bleue.

6. Lentille ophtalmique selon la revendication 1, **caractérisée par le fait que** le diamètre ou la dimension la plus importante de la zone (3) recouvrant le centre optique de vision de loin est compris entre 10 et 25 mm, et est en particulier proche de 20 mm, le diamètre ou la dimension la plus importante de la zone (4) recouvrant le centre optique de vision de près est compris entre 7 et 13 mm, et est en particulier proche de 10 mm, et la largeur de la bande (5) reliant ces deux zones est comprise entre 4 et 6 mm, et est en particulier proche de 5 mm.

7. Lentille ophtalmique selon l'une quelconque des revendications précédentes, **caractérisée par le fait que** la zone de filtre périphérique absorbant les grandes longueurs d'ondes couvre toute la surface de ladite lentille ophtalmique non recouverte par la zone centrale absorbant les courtes longueurs d'ondes.

## Claims

1. Ophthalmic lens comprising on its surface,
• a first, central, zone having a transmission of less than 30% in the short wavelength range comprised between 400 nm and 480 nm, and a transmission of greater than 50% in the long wavelength range comprised between 480 nm and 700 nm, and
• a second, peripheral, zone having a transmission of greater than 60% in the short wavelength range comprised between 400 nm and 500 nm, and a transmission of less than 50% in the long wavelength range comprised between 500 nm and 700 nm,
Said ophthalmic lens being a progressive corrective ophthalmic lens with a far vision optical centre and a near vision optical centre, the central zone essentially covering the zone around the far vision optical centre and the zone around the near vision optical centre, as well as a band linking these two zones and corresponding to the path followed by the eye when it passes from one to the other, the diameter or the largest dimension of the central zone (3) covering the far vision optical centre being comprised between 5 and 35 mm, the diameter or the largest dimension of the central zone (4) covering the near vision optical centre being comprised between 5 and 15 mm, and the width of the band (5) linking these two zones being comprised between 3 and 7 mm.

2. Ophthalmic lens according to claim 1, **characterized in that** said central zone exhibits a transmission of less than or equal to 20% for the short wavelengths comprised between 400 nm and 480 nm and a transmission of greater than 50% in the long wavelength range comprised between 480 nm and 700 nm.

3. Ophthalmic lens according to any one of claims 1 or 2, **characterized in that** the central zone is coloured yellow.

4. Ophthalmic lens according to any one of the previous claims, **characterized in that** said peripheral zone exhibits a transmission of greater than or equal to 70% in the short wavelength range comprised between 400 nm and 500 nm, and a transmission of less than 50% in the long wavelength range comprised between 500 nm and 700 nm.

5. Ophthalmic lens according to any one of the previous claims, **characterized in that** the peripheral zone is coloured blue.

6. Ophthalmic lens according to claim 1, **characterized by** the fact that the diameter or the largest dimension of the central zone (3) covering the far vision optical centre is comprised between 10 and 25 mm and is in particular approximately 20 mm, the diameter or the largest dimension of the central zone (4) covering the near vision optical centre is comprised between 7 and 13 mm, and is in particular approximately 10 mm, and the width of the band (5) linking these two zones is comprised between 4 and 6 mm, and is in particular approximately 5 mm.

7. Ophthalmic lens according to any one of the previous claims, **characterized by** the fact that the peripheral filter zone absorbing the long wavelengths covers the whole surface of said ophthalmic lens not covered by the central zone absorbing the short wavelengths.

## Patentansprüche

1. Ophthalmische Linse, welche an ihrer Oberfläche umfasst:
• einen ersten, mittleren Bereich, der eine Transmission von kleiner als 30 % im Bereich von kurzen Wellenlängen zwischen 400 nm und 480 nm und eine Transmission von größer als 50 % im Bereich von großen Wellenlängen zwischen 480 nm und 700 nm aufweist, und
• einen zweiten, peripheren Bereich, der eine Transmission von größer als 60 % im Bereich von kurzen Wellenlängen zwischen 400 nm und 500 nm und eine Transmission von kleiner als 50 % im Bereich von großen Wellenlängen zwischen 500 nm und 700 nm aufweist,
wobei die ophthalmische Linse eine ophthalmische Gleitsicht-Korrekturlinse mit einem optischen Zentrum für die Fernsicht und einem optischen Zentrum für die Nahsicht ist,
wobei der mittlere Bereich im Wesentlichen den Bereich um das optische Zentrum der Fernsicht und den Bereich um das optische Zentrum der Nahsicht sowie einen Streifen abdeckt, welcher die beiden Bereiche verbindet und dem Weg entspricht, der vom Auge verfolgt wird, wenn es von dem einen zu dem anderen übergeht,
wobei der Durchmesser oder die bedeutendste Abmessung des Bereichs (3), welcher das optische Zentrum der Fernsicht abdeckt, zwischen 5 und 35 mm liegt, der Durchmesser oder die bedeutendste Abmessung des Bereichs (4), welcher das optische Zentrum der Nahsicht abdeckt, zwischen 5 und 15 mm liegt, und die Breite des Streifens (5), welcher die beiden Bereiche verbindet, zwischen 3 und 7 mm liegt.

2. Ophthalmische Linse nach Anspruch 1,
**dadurch gekennzeichnet, dass** der mittlere Bereich eine Transmission von kleiner oder gleich 20 % für die kurzen Wellenlängen zwischen 400 nm und 480 nm aufweist, und eine Transmission von größer als 50 % im Bereich von großen Wellenlängen zwischen 480 nm und 700 nm aufweist.

3. Ophthalmische Linse nach Anspruch 1 oder 2,
**dadurch gekennzeichnet, dass** der mittlere Bereich von gelber Farbe ist.

4. Ophthalmische Linse nach einem der vorhergehenden Ansprüche,
**dadurch gekennzeichnet, dass** der periphere Bereich eine Transmission von größer oder gleich 70 % im Bereich der kurzen Wellenlängen zwischen 400 nm und 500 nm aufweist, und eine Transmission von kleiner als 50 % im Bereich von großen Wellenlängen zwischen 500 nm und 700 nm aufweist.

5. Ophthalmische Linse nach einem der vorhergehenden Ansprüche,
**dadurch gekennzeichnet, dass** der periphere Bereiche von blauer Farbe ist.

6. Ophthalmische Linse nach Anspruch 1,
**dadurch gekennzeichnet, dass** der Durchmesser oder die bedeutendste Abmessung des Bereichs (3), der das optische Zentrum der Fernsicht abdeckt, zwischen 10 und 25 mm liegt und insbesondere nahe an 20 mm liegt, der Durchmesser oder die bedeutendste Abmessung des Bereichs (4), der das optische Zentrum der Nahsicht abdeckt, zwischen 7 und 13 mm liegt und insbesondere nahe an 10 mm liegt, und die Breite des Streifens (5), welcher die zwei Bereiche verbindet, zwischen 4 und 6 mm liegt und insbesondere nahe an 5 mm liegt.

7. Ophthalmische Linse nach einem der vorhergehenden Ansprüche,
**dadurch gekennzeichnet, dass** der periphere Filter-Bereich, welcher die großen Wellenlängen absorbiert, die gesamte Oberfläche der ophthalmischen Linse bedeckt, die nicht durch den mittleren Bereich abgedeckt ist, welcher die kurzen Wellenlängen absorbiert.
